Europäisches Patentamt

European Patent Office

Office européen des brevets

(11) Publication number: **0 669 293 A1**

## EUROPEAN PATENT APPLICATION

(21) Application number: **95102250.8**

(22) Date of filing: **18.02.95**

(51) Int. Cl.⁶: **C04B 35/01**

(30) Priority: **25.02.94 US 202658**

(43) Date of publication of application:
**30.08.95 Bulletin 95/35**

(84) Designated Contracting States:
**DE ES FR GB IT**

(71) Applicant: **NORTH AMERICAN REFRACTORIES COMPANY**
**500 Halle Building, 1228 Euclid Avenue**
**Cleveland,**
**Ohio 44115-1809 (US)**

(72) Inventor: **Leitzel, Timothy A.**
**108 Horseshoe Circle**
**Pennsylvania Furnace,**
**Pennsylvania 16865 (US)**

(74) Representative: **Brückner, Raimund, Dipl.-Ing.**
**c/o Didier-Werke AG**
**Lessingstrasse 16-18**
**D-65189 Wiesbaden (DE)**

(54) **Resin bonded ceramic-carbon-metal composite comprising boron source and a combination of at least two metals.**

(57) A novel resin-bonded ceramic carbon metal composite has been developed for preparing shaped refractory articles, e.g., slide gate plates and nozzles, which articles exhibit improved oxidation resistance. The ceramic composite is prepared from a specially formulated mix including an antioxidant formulation of a boron source and a combination of at least two metals or their alloys.

EP 0 669 293 A1

## Field of the Invention

This invention relates to a novel ceramic, carbon metal composite useful as a refractory, which exhibits improved oxidation resistance, for producing slide gate plates, nozzles and the like. More particularly, a specially formulated ceramic, carbon metal composite has been developed comprising an antioxidant additive comprising a boron source and a combination of at least two metals or their alloys.

## Background of the Invention

Ceramic refractories are useful as components for application requiring good resistance to thermal shock, corrosion and erosion in contact with molten metals. Such components may, for example, be used in control means for regulating the flow of molten metals in molten metal transfer systems, for example, in the manufacture and handling of steel. Such uses include, for example, slide gates, sub-entry nozzles, and ladle shrouds. Slide gates are used for controlling the flow of molten metal from a ladle or tundish. Generally, slide gate systems including some rotary designs, consist of a fixed nozzle attached to or within a movable plate. The flow of molten metal is controlled by moving the movable plate to fully or partially align openings. During shut-off, the openings are misaligned. The principal advantage of the slide gate system over a conventional stopper rod system is its improved reliability to shutoff, ability to modulate molten metal flow, and lack of air aspiration into the molten steel product stream. However, even the best of certain refractory systems, such as high-alumina slide gate systems, are inadequate for certain molten metals, such as specialty steel like low-carbon, high-manganese grades. These corrosive steel compositions will seriously attack the bonding media used in most high-alumina grade slide gate refractories.

Historically, three main types of bond systems have been employed in manufacturing slide gate plates, nozzles and similar shaped refractory articles: (1) oxide bond, (2) carbon bond, and (3) resin bond. Conventionally-fired, oxide-bonded refractory plate compositions are fired in air at a temperature sufficient to cause sintering and mineralization of the fines. For alumina-based products, the primary bond phase is mullite ($3Al_2O_3$-$2SiO_2$) which requires about 5-10% $SiO_2$ in the bulk composition. $SiO_2$ reacts readily with components of some steel grades resulting in rapid corrosion. Magnesia-based products exhibit very good corrosion resistance but low thermal shock resistance and high thermal expansion which limit use to small plates. Carbon-bonded plate compositions are fired in a reducing atmosphere at a temperature sufficient to convert all hydrocarbon components to carbon and to at least partially convert silicon metal, to carbide by reaction with the carbon. Carbon-bonded products generally exhibit better thermal shock resistance and better corrosion resistance than oxide-bonded products, but the solubility of the SiC bond in steel contributes to corrosion, and oxidation of the carbon/carbide bond contributes to accelerated abrasion of the plate surface.

Both of the above product types are typically impregnated with petroleum pitch to improve wear resistance. This may be followed by a baking or coking process to reduce the pitch volatiles content.

Resin-bonded products are simply heated to a temperature sufficient to volatilize the resin solvents and polymerize the resin, which is a much lower temperature than either of the above firing processes. This results in shorter processing times and lower processing costs.

Resin-bonded plate products contain a metallic additive, typically aluminum, which will react with carbon to form a high-strength $Al_4C_3$ bond to replace the resin bond which decomposes during high-temperature use. In addition to the cost advantage in processing of this bond-type, the high-purity bond maximizes corrosion resistance. No $SiO_2$ or other impurities which would increase corrosion are required for sintering, it may, however, be added in various forms for thermal shock resistance or its other property affecting benefits. Although resin-bonded plates are primarily alumina-based, resin bonding also applies to other materials such as spinel, magnesia, and zirconia.

The disadvantage of a resin-bonded product is oxidation of the resin bond at low temperatures. When the aluminum metal melts, it reacts readily with carbon in the composite or oxygen from the air to form a strong bond and slow further oxidative degradation of the composite. However, at lower temperatures, when the resin bond oxidizes with little or no development of a secondary bond phase from the metal, rapid wear can result from abrasion.

Exemplary of such systems is disclosed in U.S. Patent 4,280,844. This patent discloses the use of aluminum powder and a thermosetting organic resin binder. This is the basis for many resin-bonded products.

This patent claims many benefits over previous resin-bonded products which contained no low-melting-point, metallic additive. The benefits result from formation of a high-strength, high-purity bond to replace the resin bond as it decomposes at elevated temperatures.

U.S. Patent 5,214,010 discloses the use of aluminum and silicon metal powders with at least one of silicon carbide or ferrosilicon nitride in a resin-bonded composition.

Other similar systems are disclosed in U.S. Patent Nos. 5,250,579; 5,007,615; 4,957,887; 4,869,468; 4,769,352; 4,703,022; and 4,306,030.

Moreover, much attention has been paid and considerable efforts devoted to the fabrication of ceramic articles, including the manufacture of ceramic articles by in situ oxidation of precursor metals, these previous attempts have been lacking in one or more respects with regard to the development of products having structural integrity rendering them suitable as articles of commerce. For example, the migration of aluminum from a foil configuration to develop a double-walled ceramic structure severely handicaps a article manufactured in that way from adaptation as a structural component for lack of strength, particularly compressive and/or flexural strengths. Certain of the fabrication techniques themselves are cumbersome, requiring repetitive coatings of templates or the like interspersed with drying steps.

A further deficiency of past approaches utilizing in situ oxidation of powders, foils and wires to create ceramic bodies has been the exceedingly poor contact wear and erosion resistance of such bodies. It is the inherent porosity of the products of the prior art which is responsible for their poor structural and wear properties and this has greatly limited any practical utility of such inventions.

Summary of the Invention

In accordance with the present invention, a novel resin-bonded ceramic, carbon metal composite is provided comprising at least one refractory aggregate, a cureable resin binder ad a oxidation inhibiting amount of an antioxidant additive comprising a boron source and a combination of at least two metals or their alloys selected from the group consisting of Al, Mg, Ca, Si, Fe, Sn, Zr, Zn, and Ti.

Further in accordance with the present invention a novel antioxidant formulation is provided for improving oxidation resistance at elevated temperatures of ceramic and refractory compositions, comprising:
A) boron source and
B) a combination of at least two metals, or their alloys selected from the group consisting of Al, Mg, Ca, Si, Fe, Zr, Sn, Zn, and Ti.

Still further in accordance with the present invention a novel method is provided for improving the oxidation resistance of resin-bonded ceramic compositions ad resin bonded refractory compositions used at elevated temperatures comprising admixing to said composition a antioxidant formulation comprising a boron source and a combination of at least two metals or their alloys selected from the group consisting of Al, Si, Mg, Ca, Fe, Zr, Sn, Zn and Ti.

Sill further in accordance with the present invention, shaped refractory articles are provided having improved oxidation resistance at elevated temperatures produced from the novel composite according to the present invention.

More specifically the invention employs a combination of at least two metals, and a boron source to improve low-temperature oxidation resistance in resin-bonded ceramic compositions and/or refractory compositions.

These and other aspects of the present invention will become clearer to those skilled in the art upon the reading and understanding of the specification and the claims.

Detailed Description of the Preferred Embodiments

A novel resin-bonded ceramic, carbon metal composite has been developed for improving the oxidation resistance for shaped refractory articles, e.g., slide gate plates and nozzles. The specially formulated composite comprises
1. a refractory aggregate,
2. a carbon source,
3. a cureable resin binder, and
4. a novel antioxidant formulation.

At about 800°F and above, oxidation can occur quite rapidly in various resin-bonded ceramic ad refractory compositions. When only aluminum metal is added, significant bond development and protection from further oxidation begins at about 1200°F when the aluminum melts. The composite according to the present invention, however, provides some oxidation protection as low as 900°F with larger improvements at 1000°F and 1100°F.

## Refractory Aggregate

Various refractory aggregate may be used in accordance with the present invention individually or in combination in order to tailor the composition for a variety of application needs. Examples of such aggregate include alumina, mullite, other alumina-silicates, alumina-zirconia, zirconia-mullite, zirconia, magnesia, and alumina-magnesia spinel. Grain sizing will vary depending on specific processing and application needs, but may range from -3 mesh (Tyler) through fines.

The aggregate may comprise up to 95% by weight of the total composite and preferably from about 85% to about 93% by weight of the total composite. The amount of the aggregate utilized will depend on the specific application and the aggregate used.

## Carbon Source

In addition to carbon generated by the resin binder, it is preferred to also add other high carbon-containing materials to increase the carbon content to ensure that the particular shaped refractory article has sufficient carbon which acts to reduce penetration by liquid metal and slag into the resultant formed and cured refractory article.

Carbon source additions may vary from 0 to about 20% by weight. For slide gate applications which require higher oxidation and abrasion resistance to resist surface wear, the preferred level is less than 5% by weight. Examples of carbon source additions are carbon black, graphite, powdered pitch, and coked or semi-coked pitch.

## Resin Binder

Thermosetting resin binders of any type which provide sufficient bonding strength may be employed. According to the present invention, preferably a mixture of two phenolic resins is used. One is a powder novolac and the other is a liquid resole. The resole by itself is a thermosetting resin. The novolac requires a catalyst to be thermoset, which in this case is provided by the resole. The usual curing agents for such novolac resins are used, such as hexamethylenetetramine. However, any other resin that yields a substantial amount of carbon on coking can be used since the resin contributes to the carbon needed for bonding the refractory at service temperatures. For example, such other resins may include acrylic based resins, epoxy based resins, resorcinol based resins and silicon based resins. Depending on the wetting characteristics of the resin with the specific materials, the surface area of the mixture, and the desired forming consistency, the resin content may vary from about 2% to about 10% by weight.

The phenolic resole resin solutions which may be used in this invention can be that of phenol formaldehyde or those wherein phenol is partially or completely substituted by one or more phenolic compounds such as cresol, resorcinol, 3,5-xylenol, bisphenol-A, or other substituted phenols and the aldehyde portion can be partially replaced by a phenol reactive aldehyde such as acetaldehyde, furaldehyde or benzaldehyde.

The novolac resin may be used as a liquid solution when used alone as the phenolic resin or as a liquid or solid when used together with a resole solution.

For use in this invention, the novolac may have a molecular weight of about 300 to 3,500. Solvents which can be used for dissolving the novolac include: ethylene glycol; furfuryl alcohol, diacetone alcohol, glycol ether acetate; glycol ether; and mixtures thereof as well as lower alcohols, e.g., methanol, ethanol, 1- and 2-propanol, 1-butanol and the like. Preferred novolac solids content will be from about 50% to 70% by weight of the novolac solution. Preferably, a powdered novolac resin is used in accordance with the present invention.

Preferred viscosities for the novolac solutions are from about 2,000 to 6,000 cps at 25.C. However, ground or powdered novolac is preferably added to a resole solution for forming the binder-aggregate composition according to the present invention.

A novolac resin is one prepared with a deficiency in aldehyde so that when used alone, it is normally not curable unless a curing agent such as hexamethylenetetraamine ("hexa") is added together with heat for a thermal cure. A novolac resin may be defined as the generally acidic resinous reaction product of a phenolic material and an aldehyde that, for practical purposes, does not harden or convert to an insoluble, infusible condition upon heating but remains soluble and fusible.

By "novolac" herein is meant novolac resins, polymers, copolymers, terpolymers or mixtures comprising a phenolic material such as phenol, cresol, or xylenol or mixtures thereof reacted with formaldehyde or other commercially used reactants for production of novolacs such as benzaldehyde, furaldehyde, acetaldehyde and acetone. The formaldehyde: phenolic mole ratio of the novolacs useful in the present invention is in the range of about 0.5:1 to about 0.9:1, and preferably about 0.6:1 to 0.8:1, wherein the phenolic material is selected from phenol, o-, m-, and p-cresol, xylenols ad mixtures thereof. Preferably, the novolac resin is prepared by condensing formaldehyde and phenol at a pH of less than about 4, and more preferably about 2.

Antioxidant Formulation

The antioxidant formulation comprises a combination of at least two metals or their alloys selected from the group consisting of aluminum, silicon, magnesium, calcium, zirconium, iron, tin, zinc, and titanium, and a boron source. The metals may be added as pure metals or any combination of alloys. Finer sizes of all four materials are preferred to maximize the distribution and reactivity throughout the composite. Fineness of the metals or alloys are limited somewhat by the safety concerns in processing due to the explosivity of fine metal powders.

The total metal content may range from about 1% to about 30% by weight and the boron content may vary from about 0.5% to about 10% by weight.

The boron source may be practically any compound or material that provides boron to the ceramic composite. For example, such sources include elemental boron, boron carbide, boron nitride and boron oxide. For the purposes of the present invention, boron carbide is preferred.

Preferably the combination of metals comprises aluminum, magnesium and silicon, e.g. Al and Mg, Al and Si, Al, Si and Mg or the alloys thereof and most preferable the combination comprises at least three metals or their alloys, e.g., AlSi alloy, MgAl alloy and Al metal in the form of high surface area flake.

The preferred metal ratio of the most preferred combination of metals is as follows: about 0.2% to about 1% by weight Si, preferably added as AlSi alloy; about 1% to about 2% by weight Mg, preferably added as MgAl alloy; and about 2% to about 6% by weight Al, preferably, at least in part, in the form of a high surface area flake, the balance of Al is from the alloys.

As previously mentioned, at about 800°F and above, oxidation can occur quite rapidly in the types of composites according to the present invention. When only aluminum metal is added, significant bond development and protection from further oxidation begins at about 1200°F upon the melting of aluminum. The preferable addition of silicon and magnesium, as AlSi and AlMg alloys in this case, provides some additional protection as low as 1000°F by lowering the melting point of the metals. The addition of boron as $B_4C$ provides a small amount of protection as low as 900°F and a significant degree of protection at 1100°F. $B_4C$ protects against oxidation by reacting with the oxygen to form $B_2O_3$ which forms a protective glassy coating. The combination of the metal alloys with $B_4C$ results in substantial protection at 1000°F. By providing oxidation protection at lower temperatures, damage by oxidation and abrasion in service is reduced and service life of such shaped refractory articles as slide gate plates is improved.

Processing

Material preparation and forming processes may vary significantly depending on the specific mixture and the size or shape of the end product.

In a preferred embodiment, the ceramic composite according to the present invention is prepared and the desired shaped refractory article is formed in accordance with the following process scheme.

A) The refractory aggregate fines, the carbon source and antioxidant formulation are preblended.

B) The coarse aggregate is admixed with the resin binder.

C) The preblended fines from A are blended with the coarse aggregate and resin binder mix to obtain an uncured, homogeneous ceramic composition.

D) The homogeneous mixture of C may then be molded and/or pressed into the desired shape for the refractory article.

E) The shaped article of D is heated to a temperature sufficient to cure the resin.

Curing is generally done in air at about 300°F to about 450°F to accomplish polymerization of the resin, however, higher temperatures may be used. To avoid formation of hydratable metal carbides, the maximum temperature is typically below the melting point of the metals. At temperatures where decomposition of the resin by oxidation may occur, a neutral or reducing atmosphere would be required for extended hold times.

It should be recognized that variations and modifications to the above processing scheme are within the scope of the invention depending on the specific components making up the ceramic composite and the specific application of the shaped refractory article to be prepared.

For example, mixing of the ingredients for the binder-aggregate compositions of this invention may be accomplished in any means known in the art, i.e., using any industrial mixer such as an Eirich mixer, a Simpson mixer, a Muller mixer, and the like. The binder aggregate mixture which results from the mixing step may be molded by any technique known in the art and subjected to pressure to form a desired shape. The binder in the binder-aggregate composition will wet the aggregate so that the composition becomes shapeable or can fill out a mold such as by vibration. For example, the binder-aggregate may be subjected to compression, isostatic pressing, transfer molding, extrusion, or injection molding at desired temperatures and pressures. Following shaping, the shape may be permitted to harden at ambient temperature or it may be further hardened by thermally curing before or after ambient temperature hardening. A typical heat treatment involves a continual increase in temperature up to about 120°C. (248°F.) to 205°C. (400°F.) to effect thermal cure of the resin binder and evaporate off water and organic solvent.

The resultant shaped refractory articles prepared in accordance with the present invention exhibit significantly improved oxidation resistance at 1100°F and 1000°F. Some improvement in oxidation resistance was exhibited at 900°F. Examples of shaped refractory articles that may be produced from the ceramic composite according to the present invention include slide gate plates and nozzles, BOF taphole sleeves, EAF tapholes, ladle splash pads, well blocks, nest blocks, ladle slag lines and the like.

The oxidation test results were obtained by measuring abrasion resistance of oxidized samples. Samples measuring approximately 4.5"x4.5"x2", setting on a 4.5"x2" side, were first oxidized at the specified temperature for 10 hours. A modification of ASTM C 704 was used to measure abrasion on both 4.5"x4.5" faces. The quantity of SiC abrading media was reduced from 1000 to 250 grams and the air pressure was reduced from 65 to 45 psi so that the abrasion would be limited, as much as possible, to the oxidized zone.

While the invention has been described in some detail above, the following examples will serve to illustrate the novel features and advantages of the present invention. Although these examples will show one skilled in the art how to operate within the scope of this invention, they are not to serve as a limitation on the scope of the invention, where such scope is only defined in the claims.

Example 1

A formulated uncured ceramic composite according to the present invention is set forth in Table 1. The composite mixture is prepared by first preblending the fines. The preblended fines are admixed with a mix of the coarse aggregate and resin binder to form a homogeneous mixture of all the components of the composition.

Table 1

| COARSE | Weight[1] Percent |
|---|---|
| Sintered Alumina | 62 |
| FINES | |
| Fine Alumina | 32 |
| Ball Clay | +2 |
| Carbon Black | +0.5 |
| Aluminum | 1 |
| AlSi Alloy | 3 |
| MgAl Alloy | 2 |
| Boron Carbide | +1 |
| BINDER | |
| Powder Novolac Resin | +0.5 |
| Liquid Resole Resin | +4.8 |

[1] All numbers indicated with a plus sign are addition above the total weight of the composition, i.e., above 100%.

The formulated uncured ceramic composite set forth in Table 1 is pressed in mold to form a slide gate plate and heated to temperature of about 390°F. to cure the resin binder.

Examples 2-4

One batch of each of the mixes listed in Table 2 are prepared according to the procedure set out in Example 1. These mixtures were then shaped by pressing at about six (6) tons per square inch and cured at a temperature of 390°F.

Table 2

| MIXES | Control | Ex. 2 | Ex. 3 | Ex. 4 |
|---|---|---|---|---|
| Coarse Sintered Alumina | 62 | | | |
| Fine Alumina | 32 | | | |
| Ball Clay | +2 | | | |
| Carbon Black | +0.5 | | | |
| Aluminum Flake | 1 | | | |
| Aluminum Powder | 5 | - | 5 | - |
| AlSi Alloy | - | 3 | - | 3 |
| MgAl Alloy | - | 2 | - | 2 |
| $B_4C$ | - | - | +1 | +1 |
| Powder Novolac Resin | +0.5 | | | |
| Liquid Resole Resin | +4.8 | | | |

The shaped refractory articles prepared from the mixes set out in Table 2 are tested for oxidation resistance and other properties including apparent porosity, bulk density, and MOR. The results from these tests are set out in Table 3 and Table 4.

Apparent porosity and bulk density were measured by ASTM C 830. MOR at 2550°F was tested by a modification of ASTM C 583. Individual samples were placed in the test furnace and preheated for 15 minutes before applying the load.

Table 3

| Oxidized Abrasion, $cm^3$ | | | | |
|---|---|---|---|---|
| METALS | Control | Ex. 2 | Ex. 3 | Ex. 4 |
| Aluminum Flake | 1 | 1 | 1 | 1 |
| Aluminum Powder | 5 | - | 5 | - |
| AlSi Alloy | - | 3 | - | 3 |
| MgAl Alloy | - | 2 | - | 2 |
| $B_4C$ | - | - | +1 | +1 |
| 2550°F x 10 hrs | 3.4 | 3.6 | 4.1 | 3.9 |
| 1100°F x 10 hrs | 12.2 | 8.6 | 3.1 | 3.3 |
| 1000°F x 10 hrs | 14.3 | 12.8 | 10.9 | 7.7 |
| 900°F x 10 hrs | 14.6 | 13.1 | 12.3 | 12.3 |

7

Table 4

| METALS | Control | Ex. 2 | Ex. 3 | Ex. 4 |
|---|---|---|---|---|
| Aluminum Flake | 1 | 1 | 1 | 1 |
| Aluminum Powder | 5 | - | 5 | - |
| AlSi Alloy | - | 3 | - | 3 |
| MgAl Alloy | - | 2 | - | 2 |
| $B_4C$ | - | - | + 1 | + 1 |
| Bulk Density, $g/cm^3$ | 3.13 | 3.10 | 3.09 | 3.08 |
| Apparent Porosity, % | 6.6 | 7.2 | 7.7 | 7.5 |
| MOR @ 2550°F, psi | 4640 | 4860 | 4890 | 4560 |

As illustrated from the foregoing results oxidation resistance is significantly increased at 1100°F and 1000°F while some improvement is demonstrated at 900°F.

Other features and aspects of this invention will be appreciated by those skilled in the art upon reading and comprehending this disclosure. Such features, aspects and expected variations and modifications of the reported results and examples are clearly within the scope of this invention where the invention is limited solely by the scope of the following claims.

**Claims**

1. A resin-bonded ceramic, carbon metal composite, comprising at least one refractory aggregate, a cureable resin binder and an oxidation inhibiting amount of an antioxidant additive comprising a boron source and a combination of at least two metals or their alloys selected from the group consisting of Al, Mg, Ca, Si, Fe, Sn, Zr, Zn and titanium.

2. The composite according to claim 1 wherein said resin binder is a novolac powder, a liquid resole or a mixture thereof.

3. The composite according to claim 1 wherein said metals are Al, Mg and Si or their alloys and the boron sources is selected from the group consisting essentially of elemental boron, boron carbide, boron nitride, boron oxide and mixtures thereof.

4. The composite according to claim 3 where said metals are Al, MgAl alloy and AlSi alloy and said boron source comprises boron carbide.

5. The composite according to claim 1 wherein said metals are present in amount of from about 1% to about 30% by weight and said boron source is present in amount from about 0.5% to about 4%.

6. The composite according to claim 4 wherein said metals are present in an amount of about 0.2% to about 1% by weight of Si as AlSi alloy, from about 1% to about 2% by weight of Mg as Mg Al alloy and from about 2% to about 6% by weight of Al.

7. The composite according to claim 6 wherein said Al, which is not part of an alloy, is otherwise present in the form of high surface area flake.

8. The composite according to claim 1 wherein said refractory aggregate comprises alumina.

9. The composite according to claim 1 wherein said composite, comprises:
   A) up to about 95% by weight of alumina,
   B) from about 2% to about 10% by weight of a cureable resin binder,
   C) from about 0.5% to about 10% by weight of a boron source,
   D) from about 1% to about 30% by weight of a combination of at least two metals or their alloys selected from the group consisting essentially of Al, Mg, Ca, Si, Fe, Zr, Zn, Sn and titanium.

10. The composite according to claim 9 wherein said resin binder is a mixture of a novolac and a resole, said metals are Al, AlSi alloy and MgAl alloy and said boron source comprises boron carbide.

**11.** An antioxidant formulation for improving oxidation resistance at elevated temperatures of ceramic and refractory compositions, comprising:

    A) a boron source and

    B) a combination of at least two metals, selected from the group consisting of Al, Mg, Ca, Si, Fe, Zr, Sn, Zn and Ti.

**12.** The antioxidant formulation according to claim 11 wherein said metals or their alloys are Al, Mg and Si and said boron source is selected from the group consisting essentially of elemental boron, boron carbide, boron nitride, boron oxide, and the mixtures thereof.

**13.** The antioxidant formulation according to claim 12 wherein said metals are Al, AlSi alloy and MgAl alloy and said boron source comprises boron carbide.

**14.** The antioxidant formulation according to claim 13 wherein said boron carbide amount ranges from about 0.5% to about 10.0% by weight of the total ceramic or refractory composition and said metals make up from about 1% to about 30% by weight of the total ceramic or refractory composition.

**15.** The antioxidant formulation according to claim 13 wherein said metals are present in the ratio of Si as AlSi alloy/ Mg as MgAl alloy/ Al respectively of about 0.2 to about 1.0/ about 1.0 to about 2.0/ about 2.0 to about 6.0.

**16.** A method for improving the oxidation resistance of resin-bonded ceramic compositions and resin-bonded refractory compositions used at elevated temperatures comprising admixing to a resin-bonded refractory composition an antioxidant formulation comprising a boron source and a combination of at least two metals or their alloys selected from the group consisting of Al, Si, Mg, Ca, Fe, Zr, Sn, Zn and Ti.

**17.** The method according to claim 16 wherein said metals or their alloys are Al, Mg and Si and said boron source is selected from the group consisting essentially of elemental boron, boron carbide, boron nitride, boron oxide and mixtures thereof.

**18.** The method according to claim 17 wherein said metals are Al, AlSi alloy and MgAl alloy and said boron source comprises boron carbide.

**19.** The method according to claim 16 wherein said boron source amount ranges from about 0.5% to about 10.0% by weight of the total ceramic or refractory composition and said three metals make up from about 1% to about 30% by weight of the total ceramic or refractory composition.

**20.** The method according to claim 19 wherein said ceramic and refractory composition further comprises a cureable resin binder selected from the group consisting essentially of a novolac resin, a resole resin or mixtures thereof.

**21.** A shaped refractory article having improved oxidation resistance at elevated temperatures produced from the composite of claim 1.

**22.** A shaped refractory article having improved oxidation resistance at elevated temperatures produced from the composite according to claim 9.

**23.** The shaped refractory article according to claim 20 wherein said article is selected from the group consisting of slide gate plates, slide gate nozzles, BOF taphole sleeves, EAF tapholes, ladle splash pads, well blocks, nest blocks and ladle slag lines.

**24.** The shaped article according to claim 21 wherein said article is selected from the group consisting of slide gate plates, slide gate nozzles, BOF taphole sleeves, EAF tapholes, ladle splash pads, well blocks, nest blocks and ladle slag lines.

## DOCUMENTS CONSIDERED TO BE RELEVANT

| Category | Citation of document with indication, where appropriate, of relevant passages | Relevant to claim | CLASSIFICATION OF THE APPLICATION (Int.Cl.6) |
|---|---|---|---|
| X | EP-A-0 116 194 (SHINAGAWA REFRACTORIES CO) 22 August 1984<br><br>* page 2, line 13 - page 5, line 5; claims; examples * | 1-3,5,8, 9,11,16, 19-24 | C04B35/01 |
| A | * the whole document * | 4,6,7, 10, 12-15,18 | |
| | --- | | |
| X,P | US-A-5 318 933 (SUNDELL DAVID R  ET AL) 7 June 1994<br><br>* column 2, line 49 - column 4, line 55 * | 1,2,5,8, 9,11,16, 19-24 | |
| | --- | | |
| X,P | PATENT ABSTRACTS OF JAPAN vol. 018 no. 371 (C-1224) ,13 July 1994 & JP-A-06 100378  (LIGNYTE CO LTD;OTHERS: 01)  12 April 1994,<br>* abstract * | 1-3,5, 11,12, 16,17,19 | |
| | --- | | |
| X,P | EP-A-0 599 773 (INDRESCO INC) 1 June 1994<br><br><br><br>* page 13, line 3 - line 42; claims * | 1-3,5, 11,12, 16,17, 19-24 | TECHNICAL FIELDS SEARCHED (Int.Cl.6)<br><br>C04B |
| A | * the whole document * | 4,6-10, 13-15,18 | |
| | --- | | |
| A | US-A-5 002 908 (CASSENS JR NICHOLAS) 26 March 1991<br>* the whole document * | 1-24 | |
| | --- | | |
| A | GB-A-2 131 791 (SHINAGAWA REFRACTORIES CO) 27 June 1984<br><br>* abstract * | 1-6, 10-15, 17,18 | |
| | --- | | |
| | -/-- | | |

The present search report has been drawn up for all claims

| Place of search | Date of completion of the search | Examiner |
|---|---|---|
| THE HAGUE | 7 June 1995 | Harbron, J |

EPO FORM 1503 03.82 (P04C01)

## DOCUMENTS CONSIDERED TO BE RELEVANT

| Category | Citation of document with indication, where appropriate, of relevant passages | Relevant to claim | CLASSIFICATION OF THE APPLICATION (Int.Cl.6) |
|---|---|---|---|
| A | GB-A-2 131 790 (SHINAGAWA REFRACTORIES CO) 27 June 1984<br><br>* abstract * | 1-6, 10-15, 17,18 | |
| A | GB-A-2 216 116 (DIDIER WERKE AG) 4 October 1989 | | |

TECHNICAL FIELDS
SEARCHED     (Int.Cl.6)

The present search report has been drawn up for all claims

| Place of search | Date of completion of the search | Examiner |
|---|---|---|
| THE HAGUE | 7 June 1995 | Harbron, J |

EPO FORM 1503 03.82 (P04C01)